# FASCICULE DE BREVET EUROPEEN

(11) **EP 0 944 016 B1**
(45) Date de publication et mention de la délivrance du brevet: **08.02.2006**
(21) Numéro de dépôt: 99400631.0
(22) Date de dépôt: 15.03.1999
(51) Int. Cl.: G06K 7/00, G06K 7/08, G06K 7/10

(54) **Procédé perfectionné d'identification de cartes électroniques**
Verbessertes Verfahren zur Identifizierung von Chipkarten
Improved method for identification of chipcards

(30) Priorité: 16.03.1998 FR 9803183
(43) Date de publication de la demande: 22.09.1999
(73) Titulaire: STMicroelectronics S.A., 92120 Montrouge (FR)
(72) Inventeur: Gaultier, Jean-Marie, Cabinet Ballot-Schmit, 75116 Paris (FR)
(74) Mandataire: Ballot, Paul Denis Jacques

(56) Documents cités:
- EP-A- 0 285 419
- EP-A- 0 322 701
- EP-A- 0 696 011
- EP-A- 0 702 324
- NL-A- 8 802 718

## Description

La présente invention se rapporte à un procédé perfectionné d'identification de cartes électroniques.

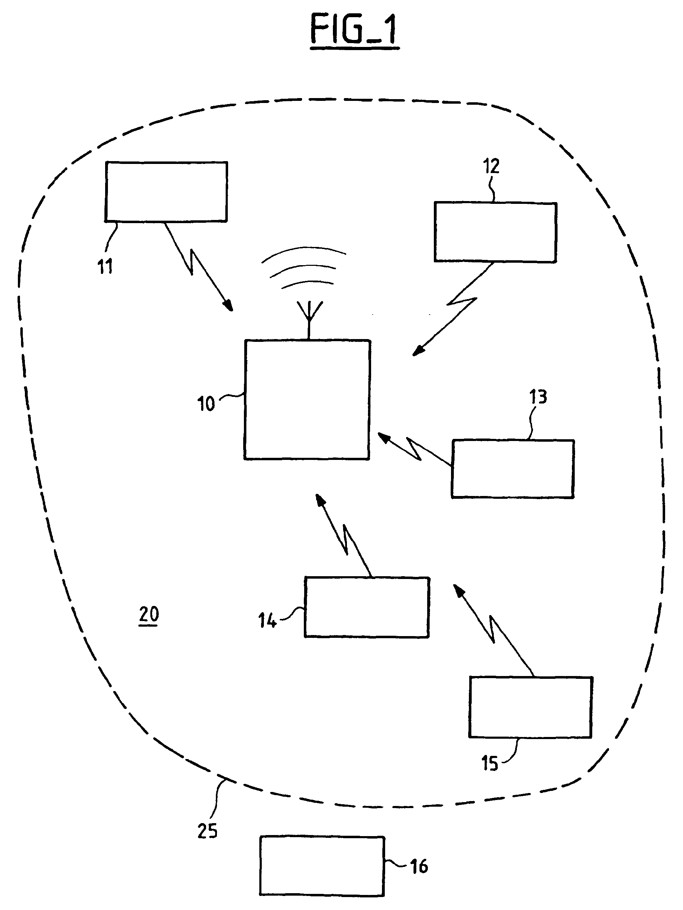

Elle s'applique à tout système comprenant une unité d'interrogation fixe telle que 10 (figure 1), pouvant dialoguer, c'est-à-dire échanger des messages, avec une pluralité de cartes électroniques, telles que 11 à 16, mobiles par rapport à l'unité d'interrogation. Le dialogue est un dialogue de type sans contact. Par exemple, les messages sont émis par onde porteuse électromagnétique radiofréquence ou hyperfréquence. Le canal de transmission est ainsi constitué par l'espace ambiant.

Au sens de la présente invention, une carte électronique peut notamment être un module électronique, un badge ou une carte à puce, et être portée par un individu, un véhicule, un appareil, du bétail, etc... L'unité d'interrogation est par exemple comprise dans une station de base, une borne de contrôle d'accès, une borne de péage à la volée, etc...

En variante, l'unité d'interrogation est mobile et les cartes électroniques sont fixes. En variante encore, l'unité d'interrogation et les cartes électroniques sont mobiles.

Dans les trois cas, des cartes telles que les cartes 11 à 15 peuvent se trouver à l'intérieur d'une zone 20, centrée sur l'unité d'interrogation 10, qui est la zone de portée des messages échangés, alors que d'autres cartes telle la carte 16 peuvent se trouver à l'extérieur de cette zone. A la figure 1, la limite de cette zone 20 est symbolisée par un trait discontinu 25. On notera que la limite de la zone 20 peut varier dans le temps, du fait par exemple de la présence d'objets étrangers formant écran à la propagation des ondes électromagnétiques.

Le volume d'air compris dans la zone 20 constitue le canal de transmission des messages échangés entre l'unité d'interrogation d'une part et les cartes électronique d'autre part. Ce canal est unique et doit être partagé dans le temps selon un protocole de communication entre l'unité et les cartes. Ce protocole est de type maître/esclave. En effet, chaque échange de message entre l'unité d'interrogation (le maître) et une carte déterminée (l'esclave) est initié par l'unité d'interrogation.

Par défaut, les cartes électroniques sont dans un état qui ne leur permet pas de recevoir les messages de commandes émis par l'unité d'interrogation, ni, à fortiori, d'y répondre. Pour qualifier cet état des cartes électroniques, on dit qu'elles sont "en sommeil".

C'est pourquoi, avant d'émettre un message de commande à destination d'une carte électronique déterminée, l'unité d'interrogation doit tout d'abord "réveiller" ladite carte, afin de la placer dans un état lui permettant de recevoir le message de commande et, le cas échéant, d'y répondre par l'émission d'un message de réponse. A cet effet, l'unité d'interrogation émet un message W particulier, dit "message de réveil", à destination de la carte électronique concernée. Après émission du message de commande et éventuellement réception du message de réponse, l'unité d'interrogation émet un message S particulier, dit "message de mise en sommeil", à destination de la carte. Celle-ci repasse alors dans l'état dans lequel elle ne peut pas recevoir de message de commande.

Le message W de réveil et le message S de mise en sommeil présentés ci-dessus comportent chacun un unique paramètre qui est un numéro d'identification de la carte électronique à laquelle ils sont destinés. C'est pourquoi on les écrira respectivement W(X) et S(X), où X est la valeur d'un numéro d'identification permettant d'identifier la carte électronique à qui le message de commande est destiné.

Un tel numéro d'identification est attribué de manière univoque à chaque carte électronique. Dit autrement, un numéro d'identification unique est associé à chaque carte électronique.

Cependant, du fait de la mobilité des cartes électroniques et/ou de sa propre mobilité, l'unité d'interrogation ignore a priori si des cartes électroniques se trouvent dans la zone 20 de portée des messages de commande qu'elle émet. Le cas échéant, elle ignore combien de cartes sont présentes et surtout, elle ignore quelles sont les cartes présentes.

C'est pourquoi la mise en oeuvre du système requiert un procédé d'identification par l'unité d'interrogation des cartes électroniques présentes dans la zone qui l'entoure et qui correspond à la zone 20 de portée des messages échangés. Dans la suite, cette zone 20 est dénommée zone d'investigation, dans la mesure où il s'agit de la zone à l'intérieur de laquelle le procédé auquel se rapporte l'invention consiste à détecter et identifier les cartes électroniques présentes. Comme on l'aura compris, identifier une carte électronique présente revient à identifier son numéro d'identification. En effet, c'est la connaissance des numéros d'identification des cartes présentes qui permet d'assurer la gestion des échanges de messages de commande.

Dans l'état de la technique, on a déjà proposé de tels procédés d'identification. Ces procédés connus mettent en oeuvre un algorithme itératif arborescent permettant de reconstituer bit à bit le numéro d'identification de chaque carte présente dans la zone d'investigation.

Schématiquement, ou peut en effet représenter l'ensemble des valeurs des numéros d'identification selon une structure en arbre.

Selon la terminologie propre à ce type de structure utilisée notamment dans le domaine informatique, on notera que la "racine" de l'arbre donne naissance à deux "branches" se terminant chacune par un "noeud" correspondant à la valeur logique respectivement 1 ou 0 d'un premier bit du numéro d'identification, par exemple le bit de poids le plus fort. Ces deux noeuds donnent chacun naissance à deux nouvelles branches se terminant chacune par un noeud correspondant à la valeur logique respectivement 1 ou 0 d'un autre bit du numéro d'identification, par exemple le bit de poids immédiatement inférieur. Et ainsi de suite jusqu'à la dernière "génération" de l'arbre sachant que, à compter de la racine, l'arbre comporte autant de générations qu'il y a de bits pour coder les numéros d'identification.

Dit autrement, chaque noeud autre que ceux de la première génération (qui correspondent à la valeur logique du bit de poids le plus fort) a un père correspondant à la valeur logique du bit de poids supérieur, et chaque noeud autre qu'un noeud de la dernière génération (qui correspondent à la valeur du bit de poids le plus faible du numéro d'identification) a deux "fils" correspondant à la valeur logique du bit de poids inférieur.

Un parcours quelconque effectué dans l'arbre à partir de la racine vers un noeud de la dernière génération, permet d'affecter une valeur logique 1 ou 0 à chaque bit du numéro d'identification, en commençant par les bits de poids le plus fort dans l'exemple.

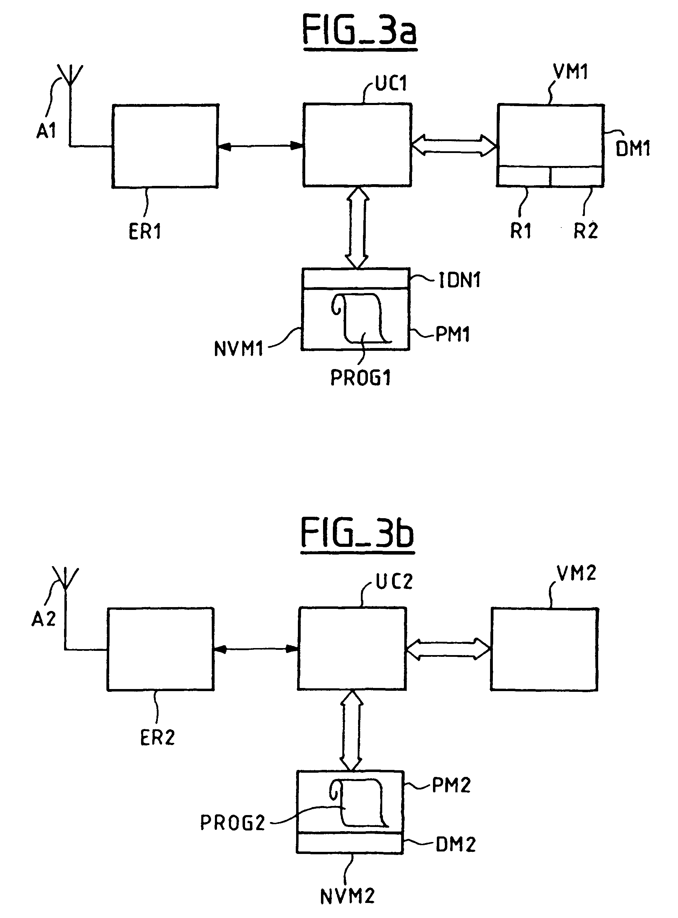

Le principe des procédés connus consiste précisément à parcourir l'arbre de la figure 2 pour en déduire les numéros d'identification des cartes électroniques présentes dans la zone d'investigation. Plus précisément, ces procédés comprennent des étapes d'émission par l'unité d'interrogation de messages d'interrogation à destination des cartes électroniques présentes dans la zone d'investigation ou à tout le moins à destination d'un groupe de telles cartes qui sont autorisées à répondre, et des étapes d'émission par lesdites cartes de messages de réponse.

L'interprétation des messages de réponse reçus par l'unité d'interrogation à chaque itération de l'algorithme permet de progresser dans l'arbre des numéros d'identification en identifiant la valeur d'un bit supplémentaire du numéro d'identification d'au moins une desdites cartes.

Dans des procédés d'identification connus, chaque message de réponse émis par une carte autorisée â répondre comporte le numéro d'identification complet de ladite carte.

Or, lorsque plusieurs cartes électroniques se trouvent simultanément dans la zone d'investigation et sont autorisées à répondre, plusieurs cartes électroniques peuvent simultanément émettre un message de réponse. On dit alors qu'il y a "collision", car les signaux électromagnétiques qui transitent simultanément sur le canal de transmission s'additionnent et, en définitive, se corrompent mutuellement. En particulier, il peut y avoir collision entre les bits des numéros d'identification émis par des cartes électroniques différentes répondant simultanément à un message d'interrogation émis par l'unité d'interrogation.

On connaît actuellement des procédés permettant de s'affranchir de ce problème de collision, voire même exploitant ce phénomène selon un algorithme d'identification particulier.

Les procédés itératifs arborescents connus dans l'état de la technique,par exemple celui mis en oeuvre dans le document de brevet EP0 702 324 pour l'indentification d'une étiquette unique parmi une pluralité d'étiquettes radiofréquences présentes dans la zone d'investigation d'une station de base, se prêtent bien à une mise en oeuvre par un logiciel, dont on sait qu'elle est particulièrement simple à réaliser avec des circuits électroniques courants, fiables et économiques, tels que les microcontrôleurs. Néanmoins, ces procédés connus présentent entre autres inconvénients la particularité d'être encore trop lents, dans la mesure ou l'exploration de l'ensemble de l'arbre des numéros d'identification est longue, et d'autant plus longue que le numéro d'identification est codé sur un nombre important de bits.

Or, dans certaines applications, on doit prévoir la coexistence d'un nombre important de cartes électroniques différentes, donc prévoir un nombre important de bits pour coder leurs numéros d'identification respectifs, tout en sachant que, dans la plupart des cas, seulement un nombre très faible d'entre elles seront simultanément présentes dans la zone d'investigation. Tel est le cas par exemple dans un système de péage à la volée, où les cartes électroniques sont des modules à transpondeur équipant chaque véhicule automobile dont le propriétaire est abonné au service concerné et où l'unité d'interrogation est comprise dans une borne de péage fixe.

L'objet de la présente invention est de proposer un procédé d'identification de cartes électroniques perfectionné, qui soit plus rapide que ceux connus dans l'état de la technique.

En effet, l'invention propose un procédé d'identification de cartes électroniques à chacune desquelles est attribué de manière univoque un numéro d'identification codé sur M bits, le procédé consistant à reconstituer les numéros d'identification des cartes présentes dans une zone d'investigation selon un algorithme itératif arborescent. Selon l'invention cet algorithme comprend, à chaque itération, les étapes suivantes:
A) émission par une unité d'interrogation d'un message d'interrogation qui comprend :
   - soit un message d'interrogation général à destination de toutes les cartes présentes encore non identifiées pouvant se trouver dans la zone d'investigation, un tel message d'interrogation général étant émis en particulier à la première itération du procédé,
   - soit un message d'interrogation particulier à destination de certaines seulement desdites cartes, qui sont autorisées à répondre à un tel message;
B) émission d'un message de réponse comprenant un numéro variable :
   - soit, si le message d'interrogation est un message d'interrogation général, simultanément par chacune des cartes présentes encore non identifiées, auquel cas la valeur du numéro d'identification de la carte est affectée avant l'émission comme valeur courante du numéro variable;
   - soit, si le message d'interrogation est un message d'interrogation particulier, simultanément par celles seulement des cartes présentes autorisées à répondre à un tel message qui ont un dit numéro variable dont le k-ième bit présente une valeur logique prédéterminée, auquel cas la valeur courante du numéro variable est modifiée avant émission par un décalage de ses bits d'un nombre de rangs égal à k, où k est un paramètre entier du message d'interrogation particulier, les autres telles cartes se plaçant dans un état où elles ne sont plus autorisées à répondre aux messages d'interrogation particuliers et dont elles ne sortiront qu'à réception d'un nouveau message d'interrogation général;
C) réception simultanée des messages de réponse par l'unité d'interrogation et analyse des numéros reçus pour,
   C.1) en cas de réception d'au moins deux messages de réponse, une collision définie par la réception simultanée de deux bits de valeurs différentes intervenant alors nécessairement à un rang i des numéros variables reçus simultanément, identification de la valeur d'un groupe de i bits du numéro d'une carte présente encore non identifiée et, en bouclant sur l'étape A), émission d'un message d'interrogation particulier dont le paramètre k est affecté de la valeur de i; ou
   C.2) en cas de réception d'un unique message de réponse, identification d'un groupe des j derniers bits encore non identifiés du numéro d'identification d'une carte présente en sorte que ladite carte est identifiée et, en bouclant sur l'étape A), émission d'un message d'interrogation général.

Selon un avantage de l'invention, le numéro d'identification d'une carte présente est reconstitué non pas bit à bit mais bloc de bits par bloc de bits. La taille d'un bloc est variable et déterminée par le rang i auquel se produit une éventuelle collision entre les bits des numéros variables émis par les cartes. Ainsi, l'identification des cartes présentes peut nécessiter moins d'itérations qu'il n'y a de bits à identifier.

Selon un autre avantage, lorsqu'une seule carte, ou du moins une seule carte encore non identifiée, se trouve dans la zone d'investigation, son identification ne nécessite qu'une seule itération dans la mesure où son numéro d'identification complet est émis en réponse à un message d'interrogation général.

D'autres caractéristiques et avantages de l'invention, apparaîtront plus clairement à la lecture de la description détaillée qui va suivre. Celle-ci est purement illustrative et doit être lue en regard des dessins annexés, sur lesquels on a représenté:
- à la figure 1, déjà analysée: un exemple de système comportant une unité d'interrogation et une pluralité de cartes électroniques;
- à la figure 2, un exemple de format d'un message émis;
- à la figure 3a et à la figure 3b, un mode de réalisation schématique d'une carte électronique et d'une unité d'interrogation selon l'invention;
- à la figure 4, un tableau montrant l'évolution, au cours de la mise en oeuvre du procédé pour l'identification de cinq cartes présentes, du contenu de registres desdites cartes et de l'unité d'interrogation;
- aux figures 5a à 5d, la forme du signal électrique présent sur le canal de transmission, pendant la durée de transmission d'un bit en fonction de la valeur du (ou des) bit(s) transmis.

La transmission des messages par l'unité d'interrogation et par les cartes électroniques est réalisée selon un protocole de communication déterminé qui spécifie le format et la syntaxe des messages. La transmission s'effectue de manière synchrone. Elle est séquencée à un rythme déterminé, l'unité d'interrogation et les cartes électroniques comportant des moyens connus pour se caler sur le rythme d'une même horloge ou de deux horloges synchrones ou diasynchrones.

A la figure 2, on a représenté un exemple possible de format de message pour la mise en oeuvre de l'invention. Les messages émis comportent un (ou plusieurs) mot(s) d'information utile et plusieurs bits de service.

Le message comporte tout d'abord un bit de démarrage START qui a pour fonction de synchroniser l'horloge de l'unité destinatrice avec le message reçu.

Le message comporte ensuite au moins un mot d'information utile tel que le mot INFO, par exemple codé sur huit bits (un octet). Ce mot peut être un mot d'instruction, dont la valeur indique la nature d'une commande à réaliser par l'unité destinatrice. Il peut aussi s'agir d'un mot d'adresse, dont la valeur indique l'adresse ou une partie de l'adresse d'un emplacement mémoire de l'unité destinatrice à laquelle, par exemple, une donnée doit être lue ou écrite. Enfin, il peut aussi s'agir d'un mot de donnée, dont la valeur indique la valeur d'une donnée à traiter par l'unité ou la carte destinatrice.

Le message comporte encore un bit de contrôle CHECK qui peut notamment être un bit de contrôle de parité. La valeur du bit CHECK est fixée à la valeur logique 1 ou O, afin de compléter la somme des valeurs des bits du mot d'information utile INFO à une valeur paire ou impaire selon le type de parité adopté. Le rôle du bit de contrôle CHECK est de permettre à l'unité destinatrice de détecter d'éventuelles erreurs de transmission, afin, le cas échéant, de solliciter une ré-émission du message. Des erreurs de transmission peuvent être provoquées par des perturbations sur le canal.

Le message comporte enfin un bit STOP de fin de transmission, qui indique la fin du message.

En outre, le protocole prévoit en général un nombre d'unités temporelles élémentaires faisant suite au bit STOP, pendant lesquelles l'unité émettrice n'émet plus aucun bit sur le canal, afin de le laisser libre pour que l'unité destinatrice émette un bit d'acquittement de la communication de valeur logique déterminée. La valeur de ce bit d'acquittement indique si le message a été correctement reçu, notamment en fonction du contrôle effectué à l'aide du bit de contrôle CHECK, et, le cas échéant, si une ré-émission du message est requise. A la figure 2, on a représenté quatre telles unités temporelles élémentaires faisant suite au bit STOP précité.

Comme l'homme du métier l'aura compris, une unité temporelle élémentaire correspond à la durée normale de transmission d'un bit. Cette durée dépend du débit numérique de la transmission.

La syntaxe des messages émis, c'est à dire l'ordre d'émission des différents types de mots d'information utile transmis (mot de commande, mot d'adresse ou mot de donnée) est déterminée par le protocole de communication propre au système.

Dans l'exemple de mise en oeuvre du procédé selon l'invention qui va suivre, on considère des cartes électroniques à chacune desquelles est attribué de manière univoque un numéro d'identification codé sur huit bits (un octet). Dans chaque carte, le numéro d'identification est sauvegardé dans une mémoire. Dans certaines applications, le numéro d'identification est attribué en usine lors de la fabrication de la carte électronique. La mémoire est alors une mémoire non volatile, du type d'une mémoire EPROM, EEPROM, EPROM-Flash, etc... Dans la suite, on considérera que tel est le cas. Cependant, dans d'autres applications, le numéro d'identification est défini aléatoirement et attribué à chaque carte, de façon dynamique, lors de sa première entrée dans la zone de portée 20 entourant l'unité d'interrogation 10 (figure 1). La mémoire peut alors être une mémoire volatile du type d'une mémoire à accès aléatoire (RAM).

Les informations sont transmises avec un débit numérique égal à 106 Kilobits par seconde (Kbits/s). Les messages sont émis par modulation en amplitude d'une onde porteuse radiofréquence, de fréquence égale à 13,56 Mégahertz (MHz). La profondeur de la modulation est égale à 15%.

A la figure 3a, on a schématiquement représenté un mode de réalisation d'une carte électronique convenant à la mise en oeuvre du procédé selon l'invention.

Une telle carte comporte une antenne A1 pour l'émission et la réception de messages par voie électromagnétique radiofréquence.

Cette antenne A1 est reliée à un module d'émission/réception ER1, qui regroupe un ensemble de moyens connus qu'il est inutile de décrire en détails dans la présente description dans la mesure où ils sont en eux-même à la portée de l'homme du métier.

Ces moyens sont destinés à remplir plusieurs fonctions. Ainsi, en réception, ils permettent de filtrer le signal radiofréquence capté par l'antenne A1, de le démoduler, de filtrer le signal démodulé pour éliminer les composantes aux basses fréquences dues au bruit électromagnétique introduit par le canal de transmission, de retrouver la fréquence et le rythme de la transmission, d'échantillonner le signal démodulé de façon synchrone, et enfin d'extraire les données utiles du message reçu. En émission, ils permettent de mettre en forme un message à émettre à partir du (ou des) mot(s) d'information utile à transmettre, de générer la porteuse radiofréquence à 13,56 MHz, de la moduler en amplitude en fonction de la valeur des bits du message à émettre, d'amplifier le signal radiofréquence modulé et de l'appliquer en entrée de l'antenne A1.

La carte comporte encore une unité de commande UC1 destinée à piloter son fonctionnement. Il peut s'agir d'un microprocesseur.

L'unité de commande UC1 est en liaison avec une mémoire non volatile NVM1. Cette mémoire comprend une zone PM1 dans laquelle est enregistré de façon permanente un programme PROG1 de fonctionnement de la carte, qui pilote l'unité de commande UC1. Elle comprend aussi une zone IDN1 dans laquelle le numéro d'identification de la carte est enregistré de manière permanente.

L'unité de commande UC1 est aussi en liaison avec une mémoire volatile VM1. Cette mémoire comprend une zone DM1 dans laquelle des données peuvent être sauvegardées en cours de fonctionnement de la carte. On verra ci-dessous que le numéro variable selon l'invention est sauvegardé dans cette zone DM1 lors de la mise en oeuvre du procédé d'identification selon l'invention. Cette mémoire comporte en outre des emplacements mémoire tels que des registres R1 et R2 appropriés pour la sauvegarde de deux informations numériques (ou drapeaux) dont la valeur logique 1 ou 0 détermine des configurations de la carte.

Pour faire simple, on dira que les registres R1 et R2 ont pour fonction d'indiquer, pour le premier, si la carte a déjà été identifiée auquel cas elle n'est pas autorisée à répondre à un message d'interrogation général émis par l'unité d'interrogation, et, pour le second, si elle est autorisée à répondre aux messages d'interrogation particuliers émis par l'unité d'interrogation. Le message d'interrogation général et les messages d'interrogation particuliers cités ci-dessus sont des messages intervenant dans la mise en oeuvre du procédé d'indentification selon l'invention, dont le rôle sera explicité plus loin.

Le registre d'état R1 est testé à la réception de tout message d'interrogation général. Si ce registre est à l'état logique 0, aucune action ne se produit dans la carte. En particulier, la carte n'émet aucun message de réponse. De même, le registre R2 est testé à la réception de tout message d'interrogation particulier. Si ce registre est à l'état logique 0, aucune action ne se produit dans la carte. En particulier, la carte n'émet aucun message de réponse.

Les registres R1 et R2 sont initialement programmés à la valeur logique 1 en sorte que la carte est autorisée à répondre, respectivement, à un message d'interrogation général et à un message d'interrogation particulier.

On verra dans la suite que, au cours de l'identification de toutes les cartes présentes dans la zone d'investigation, une carte qui vient d'être identifiée (c'est à dire dont le numéro d'identification vient d'être reconstitué) est mise en sommeil du fait de l'émission par l'unité d'interrogation d'un message de mise en sommeil S(X), où X est un paramètre qui désigne la carte à laquelle ledit message est destiné. Plus précisémment ce paramètre prend la valeur du numéro d'identification qui vient d'être reconstitué.

L'émission du signal de mise en sommeil d'une carte qui vient d'être identifiée provoque la programmation d'une valeur logique 0 dans les registres d'état R1 et R2 de la carte, en sorte que ladite carte n'est plus autorisée à répondre aux messages d'interrogation généraux ou particuliers ultérieurement émis par l'unité d'interrogation.

On verra également comment et à quel moment la valeur logique o est programmée dans le seul registre d'état R2, ce qui implique que la carte, même si elle est encore non identifiée (R1 à la valeur logique 1), n'est plus autorisée à répondre aux messages d'interrogation particuliers émis par l'unité d'interrogation.

A la figure 3b, on a représenté un mode de réalisation schématique d'une unité d'interrogation convenant à la mise en oeuvre du procédé selon l'invention.

De même que les cartes électroniques dont l'une a été représentée schématiquement à la figure 3a, l'unité d'interrogation comporte une antenne A2, un module d'émission/réception ER2, une unité de commande UC2 et une mémoire non volatile NVM2 comprenant une zone programme PM2 et une zone données DM2. Ces moyens sont comparables et remplissent les mêmes fonctions que les moyens correspondants A1, ER1, UC1, NVM1, PM1 et DM1 de la carte décrite ci-dessus. Ainsi, la zone programme PM2 a pour fonction de sauvegarder de manière permanente un programme PROG2 pilotant l'unité de commande UC2 pour la mise en oeuvre du procédé d'identification selon l'invention. Néanmoins, il est clair que la zone de donnée DM2 contient des données d'une autre nature différente qu'un numéro d'identification de carte. Ces données peuvent comprendre un numéro d'identification de l'unité d'interrogation, un numéro et/ou des références de fabrication, etc...

L'unité de commande UC2 de l'unité d'interrogation est également en liaison avec une mémoire volatile VM2 comprenant une première zone dans laquelle est mémorisé un numéro en cours de reconstitution (dit ci-après numéro RN), une deuxième zone dans laquelle est mémorisé un compteur modulo huit dont la valeur sera notée k' dans la suite, et une troisième zone dans laquelle sont enregistrés les numéros d'identification des cartes présentes déjà identifiées.

Le procédé d'identification selon l'invention consiste à identifier les cartes présentes dans la zone d'investigation 20 en reconstituant leurs numéros d'identification, selon un algorithme itératif arborescent. Comme il a été dit en introduction, l'invention permet une identification plus rapide des cartes présentes dans la zone d'investigation dans la mesure où un numéro d'identification peut être reconstitué bloc de bits par bloc de bits. La taille d'un bloc de bits identifiés à une itération donnée de l'algorithme dépend, comme il apparaîtra plus clairement ci-après, de la valeur du numéro d'identification des autres cartes encore non identifiées et autorisées à répondre qui se trouvent également dans la zone d'investigation.

De préférence, les numéros d'identification sont identifiés en commençant par leur(s) bit(s) de poids le plus fort, puis les autres bits par ordre décroissant de leur poids. Ainsi, dans la description du procédé selon l'invention qui va suivre, on désignera parfois le bit de poids le plus fort d'un numéro d'identification en se référant au "premier" bit dudit numéro. De même, les termes tels que suivant, précédent, premier et dernier seront utilisés ci-dessous en référence à cette convention.

Mais, moyennant les adaptations nécessaires qui apparaîtront clairement à l'homme du métier, on pourrait également procéder différemment en identifiant les bits selon une autre loi. Notamment, on pourrait tout aussi bien procéder dans l'ordre inverse en commençant par identifier le bloc de poids le plus faible puis les autres bits par ordre croissant de leur poids, sans modifier le principe de l'invention.

Chaque itération de l'algorithme du procédé selon l'invention comprend notamment une étape A d'émission d'un message d'interrogation par l'unité d'interrogation, ainsi le cas échéant qu'une étape B d'émission d'un message de réponse par au moins une carte présente encore non identifiée, et qu'une étape C de réception et d'analyse des messages de réponse reçus par l'unité d'interrogation.

Ces étapes A, B et C vont maintenant être décrites, avant d'exposer un exemple de mise en oeuvre de l'algorithme selon l'invention.

Ainsi qu'il a déjà été dit, le message d'interrogation émis par l'unité d'interrogation (étape A) peut être de deux types différents. Il peut s'agir d'un message d'interrogation général GC, mais il peut aussi s'agir d'un message d'interrogation particulier PC.

Un message d'interrogation général est un message ayant le format représenté à la figure 2 dans lequel le mot d'information utile émis est un mot de commande dont la valeur est par exemple 00100000.

Un message d'interrogation particulier est un message ayant le format représenté à la figure 2 dans lequel le mot d'information utile émis est un mot de commande dont la valeur est par exemple 00101xxx. Les trois bits de poids faible de ce mot déterminent la valeur d'un paramètre k du message, pouvant prendre 8 valeurs différentes (pour des numéros d'identification codés sur 8 bits). C'est pourquoi, dans la suite, on utilise la référence PC(k) pour désigner un message d'interrogation particulier dont le paramètre est égale à k. Le rôle de ce paramètre apparaîtra dans la suite.

Un message d'interrogation général est émis à la première itération de l'algorithme selon l'invention.

On décrit ci-dessous le déroulement d'une itération débutant par l'émission d'un message d'interrogation général.

Un message d'interrogation général GC est émis à destination de toutes les cartes présentes dans la zone d'investigation qui sont encore non identifiées. La signification de l'expression "à destination" employée ci-dessus doit être précisée: cette expression introduit le groupe de cartes sur lesquelles le message dont il s'agit produit un effet, c'est à dire les cartes qui le reçoivent et dans lesquelles une action est effectuée en conséquence de cette réception. Pour les autres cartes éventuellement présentes, le message est sans effet, c'est à dire qu'aucune action n'est effectuée.

A réception d'un message d'interrogation général, les actions suivantes (étape B) sont effectuées dans chaque carte électronique à laquelle il était destiné, c'est à dire dans chaque carte électronique présente encore non identifiée (i.e. dont le registre d'état R1 contient la valeur logique 1):
- programmation de la valeur logique 1 dans le second registre d'état R2 en sorte que la carte, si tel n'était pas déjà le cas, est autorisée à répondre aux messages d'interrogation particuliers qui pourront ultérieurement être émis par l'unité d'interrogation (le rôle de cette étape apparaîtra à la lecture du reste de la description du présent exemple de mise en oeuvre de l'invention);
- affectation comme valeur courante du numéro variable VNp de la valeur du numéro d'identification de la carte (où l'indice p distingue l'une quelconque desdites cartes parmi les autres);
- émission par la carte d'un message de réponse comprenant le numéro variable VNp.

Ainsi, en réponse à une message d'interrogation général GC, toutes les cartes électroniques présentes encore non identifiées sont amenées à émettre un message de réponse comprenant un numéro dont la valeur est celle de leur numéro d'identification.

La réception éventuelle et, le cas échéant, l'analyse de ces messages de réponse, par l'unité d'interrogation (étape C), permet de définir si une action doit être effectuée ou non lors d'une autre itération et, le cas échéant quelle action qui doit ainsi être effectuée. En effet, trois cas peuvent se présenter.

Un premier cas est celui où au moins deux messages de réponse sont reçus, ces messages étant forcément reçus simultanément dans la mesure où les cartes répondent dans le même intervalle de temps après la réception du message d'interrogation. On notera que, par hypothèse, les bits des numéros variables émis dans les messages de réponse sont transmis en commençant par les bits de poids fort.

Les numéros d'identification des cartes étant uniques, il est évident que deux numéros variables reçus par l'unité d'interrogation ne peuvent être identiques bit à bit. Il s'ensuit qu'il existe forcément un rang des numéros variables reçus, ce rang étant référencé i dans la suite, auquel deux bits de valeurs différentes sont reçus simultanément par l'unité d'interrogation. On rappelle qu'une telle réception simultanée de deux bits de valeurs différentes est appelée collision. Dit autrement donc, dans ce premier cas, une collision intervient nécessairement à un rang i des numéros variables reçus.

Les actions suivantes sont alors effectuées dans l'unité d'interrogation (étape C.1):
- identification de la valeur d'un groupe de i bits du numéro en cours de reconstitution RN mémorisé dans la mémoire volatile VM2 de l'unité d'interrogation (figure 3b); plus précisément, lesdits i bits sont affectés, pour les i-1 premiers d'entre eux, de la valeur des i-1 bits des numéros variables reçus avant la collision, et, pour le i-ème d'entre eux, d'une valeur logique arbitraire 1 ou 0, par exemple de la valeur logique 1; ce bloc est affecté, dans l'ordre décroissant de poids, aux bits du numéro RN à partir du rang correspondant à la valeur k' du compteur mémorisée dans la mémoire volatile VM2 de l'unité d'interrogation (figure 3b); le nombre k' indique le rang du premier bit encore non identifié du numéro RN; ce nombre est initialisé à la valeur 1 lorsque l'unité d'interrogation émet un message d'interrogation général à l'étape A;
- incrémentation du compteur k' de i unités;
- émission d'un message d'interrogation particulier avec, pour paramètre k, la valeur i du rang des numéros variables reçus auquel s'est produit la collision; dit autrement, la valeur k du paramètre dudit message particulier émis est affectée de la valeur de i.

Un deuxième cas est celui où un unique message de réponse est reçu. Cela signifie qu'il existe une unique carte encore non identifiée dans la zone d'investigation. Il n'a a alors aucune collision dans les bits du numéro variable reçu. Celui-ci indique donc sans ambiguïté la valeur des bits encore non identifiés du numéro NR.

Les actions suivantes sont alors effectuées dans l'unité d'interrogation (étape C.2):
- identification d'un groupe de bits correspondant aux j derniers bits encore non identifiés d'une carte électronique présente, c'est à dire des j derniers bits encore non identifiés du numéro NR; on notera que les grandeurs j et k' sont liées entre elles par la relation j=8-(k'-1), pour des numéros d'identification codés sur 8 bits; dit autrement, on complète les j derniers bits encore non identifiés du numéro RN avec, dans l'ordre de leur rang, la valeur des j premiers bits du numéro variable reçu; de la sorte, on a identifié tous les bits du numéro d'identification d'une carte présente;
- incrémentation du compteur k' de j unités; autrement dit il est amené à la valeur huit c'est à dire à la valeur un puisque c'est un compteur modulo huit;
- émission par l'unité d'interrogation d'un message S de mise en sommeil à destination de la carte ainsi identifiée, en sorte que ladite carte n'est plus autorisée à répondre aux messages d'interrogation généraux ou particuliers ultérieurement émis par l'unité d'interrogation;
- émission d'un message d'interrogation général afin de vérifier qu'effectivement aucune autre carte encore non identifiée n'est présente dans la zone d'investigation, et en particulier qu'aucune nouvelle carte n'y est entrée dans l'intervalle de temps qui s'est écoulé depuis la dernière émission d'un message d'interrogation général; comme on l'a compris, l'étape B d'émission (éventuellement) d'un message de réponse par une (ou des) carte(s) présente(s) et l'étape C de réception et d'analyse de ces messages de réponse par l'unité d'interrogation sont alors celles qu'on a déjà décrites ci-dessus; dit autrement, l'algorithme boucle alors sur l'étape A ci-dessus.

Un troisième cas enfin est celui où aucun message de réponse n'est reçu par l'unité d'interrogation. Cela signifie qu'il n'y a pas de cartes électronique encore non identifiée dans la zone d'investigation. L'algorithme s'arrête là. Ceci est le cas lorsqu'il n'y a aucune carte dans la zone ou bien lorsque toutes les cartes présentes ont déjà été identifiées.

Il reste maintenant à décrire le déroulement d'une itération de l'algorithme qui débute, à l'étape A, par l'émission d'un message d'interrogation particulier PC(k).

On rappelle qu'un message d'interrogation particulier est émis à destination de certaines seulement des cartes présentes qui sont encore non identifiées (c'est à dire dont le premier registre d'état R1 est à la valeur logique 1), à savoir celles dont le second registre d'état R2 est à la valeur logique 1. Dit autrement, ces cartes sont les seules autorisées à répondre à un tel message.

C'est pourquoi le registre d'état R2, de même que le registre R1, sont testés à la réception d'un message d'interrogation particulier par la carte. Il faut en effet que le registre R1 et également le registre R2 contiennent la valeur logique 1 pour que le message d'interrogation particulier produise un effet sur la carte.

En fait, on va voir que si toutes les cartes remplissant cette double condition sont théoriquement autorisées à répondre à un message d'interrogation particulier, une partie seulement de ces cartes émet effectivement un message de réponse.

En effet, à réception d'un message d'interrogation particulier, les actions effectuées (étape B) dans chaque carte électronique à laquelle il était destiné sont différentes selon la valeur courante du numéro variable mémorisé dans la mémoire volatile VM1 de la carte:
- pour les cartes qui ont un numéro variable VN₁ dont le k-ième bit présente la valeur logique arbitraire que l'on a envisagée ci-dessus en ce qui concernait l'étape C.1, à savoir la valeur logique 1 dans l'exemple:
   - modification de la valeur courante du numéro variable VN_{P} par décalage de ses bits d'un nombre de rangs égal à k, où k est la valeur du paramètre précité du message d'interrogation particulier; plus précisément, les bits des numéros variables étant reçus par l'unité d'interrogation en commençant par les bits de poids fort, ce décalage des bits du numéro variable de i rangs est un décalage à gauche; de préférence, à mesure que les bits du numéro variable sont décalés à gauche, les i bits de poids faibles dudit numéro sont affectés d'une même valeur logique déterminée 1 ou 0, par exemple de la valeur logique 1;
   - puis émission par la carte d'un message de réponse comprenant le numéro variable VN_{P}, avec sa nouvelle valeur courante résultant du décalage de ses bits tel que décrit ci-dessus;
   - pour les autres les cartes, à savoir celles qui ont un numéro variable VN_{P} dont le k-ième bit présente la valeur logique complémentaire de la valeur logique arbitraire envisagée ci-dessus, c'est à dire la valeur logique 0 dans l'exemple, aucun message de réponse n'est émis; en outre, la valeur logique 0 est programmée dans le second registre d'état R2, en sorte que la carte n'est plus autorisée à répondre aux message d'interrogation particuliers ultérieurement émis par l'unité d'interrogation.

Les messages de réponse émis par la (ou les) carte(s) électronique(s) concernée(s) sont reçus et analysés par l'unité d'interrogation dans une étape C qui se déroule de manière identique à ce qui a été décrit ci-dessus en ce qui concernait le traitement d'une itération débutant par l'émission d'un message d'interrogation général. Il n'y a donc pas lieu de revenir sur cette description.

On notera simplement que, ainsi que l'homme du métier l'aura compris, dès lors qu'au moins une carte présente encore non identifiée émet un message de réponse à un message d'interrogation général émis par l'unité d'interrogation, celle-ci émet autant de messages d'interrogation qu'il est nécessaire pour parvenir à l'identification complète du numéro d'identification d'une de ces cartes, c'est à dire aussi pour effectuer un parcours complet dans l'arbre des numéros d'identification.

A chaque itération commençant par l'émission d'un message d'interrogation particulier, une partie des cartes encore non identifiées peut être placée dans un état dans lequel elle n'est plus autorisée à répondre aux messages d'interrogation particuliers (du fait de la programmation d'une valeur logique 0 dans leur second registre d'état R2). A chacune de ces itérations, on progresse dans l'arbre des numéros d'identification puisqu'on identifie un ou plusieurs bits c'est à dire qu'on descend de une ou plusieurs générations de l'arbre.

Néanmoins, n'étant pas encore identifiées, les cartes ainsi laissées de côté doivent être concernées par les explorations de l'arbre des numéros d'identification ultérieurement réalisées. C'est pourquoi, comme on l'a d'ailleurs déjà dit plus haut, un message d'interrogation général ultérieur a entre autre pour effet la programmation de la valeur logique 1 dans le second registre d'état R2 des cartes encore non identifiées (dont le premier registre d'état R2 contient toujours la valeur logique 1).

On notera en outre que la fonction des registres d'état R1 et R2 est d'indiquer pour chaque carte respectivement si elle a déjà été identifiée et si elle est autorisée à répondre aux messages d'interrogation particuliers. Néanmoins l'homme du métier peut envisager d'autres manières d'assurer la fonction de ces deux registres. La même remarque peut être faite en ce qui concerne le compteur modulo huit donnant la valeur de k'. C'est pourquoi les registres R1 et R2 et le nombre k', ainsi que les opérations les concernant, n'ont été présentés ci-dessus que pour illustrer un exemple possible pour la mise en oeuvre de l'algorithme du procédé selon l'invention.

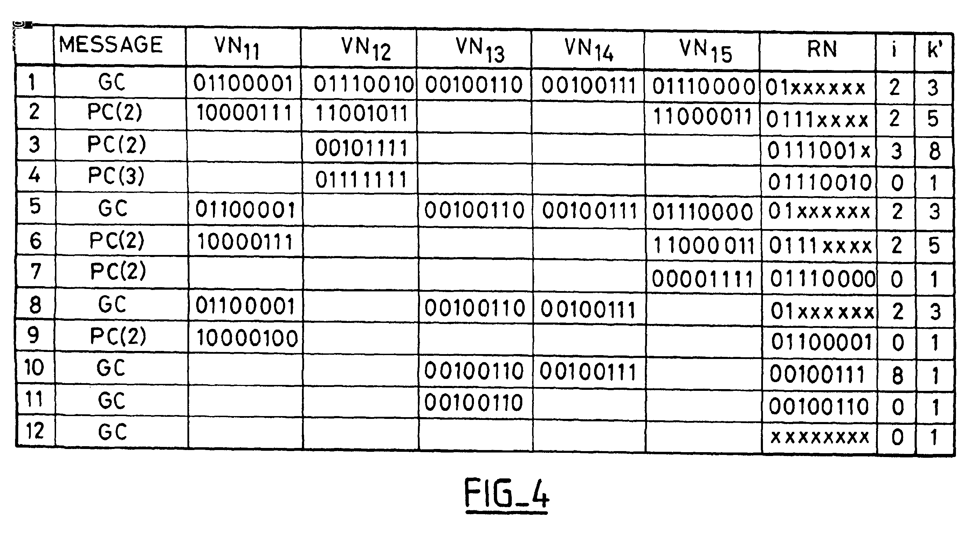

Un exemple concret de mise en oeuvre du procédé d'identification selon l'invention va maintenant être décrit en référence à la figure 4.

Pour cet exposé, on considère cinq cartes électroniques 11, 12, 13, 14 et 15 présentes dans la zone d'investigation 20 (figure 1). Ces cartes ont un numéro d'identification dont la valeur en notation binaire est, respectivement 01100001, 01110010, 00100110, 00100111, et 01110000.

La figure 4 est un tableau dans lequel la première colonne (à gauche) indique le numéro d'une itération de l'algorithme.

La deuxième colonne indique, pour chaque itération la nature du message d'interrogation qui est émis par l'unité d'interrogation, en précisant, pour les messages d'interrogation particuliers, la valeur du paramètre k entre parenthèses.

Dans les cinq colonnes suivantes, on a inscrit la valeur du numéro variable VN₁₁ à VN₁₅ mémorisé dans chacune des cartes respectivement 11 à 15, telle qu'elle apparaît à la fin de l'étape B de l'itération. Par souci de clarté, seules les valeurs courantes du numéro variable des cartes qui sont alors autorisées à répondre aux message d'interrogation particuliers sont indiquées dans ces colonnes.

Dans la huitième colonne, on a indiqué la valeur du numéro RN en cours de reconstruction, qui est mémorisée dans la mémoire volatile VM2 de l'unité d'interrogation, telle qu'elle apparaît à la fin de l'étape C de l'itération. On notera que les valeurs des bits encore non identifiés, qui sont donc inconnues, sont remplacées par le signe x par souci de clarté. Cette notation ne préjuge en rien de l'état réel de programmation des bits correspondants dudit numéro dans la mémoire VM2.

Dans la neuvième colonne on a indiqué la valeur du rang i auquel se produit éventuellement une collision entre les bits des numéros variables émis en réponse aux messages d'interrogation. Lorsqu'aucune collision ne se produit, c'est à dire lorsqu'un seul message de réponse est émis par les cartes, la valeur de i est nulle.

Enfin dans la dixième colonne, on a indiqué, pour chaque itération, la valeur du nombre k' désignant le rang du premier bit encore non identifié du numéro RN en cours de reconstruction telle qu'elle apparaît à la fin de l'étape C de l'itération.

Le contenu du tableau parle de lui-même, et ce comprend très bien vu les précisions données ci-dessus concernant le déroulement de chaque itération dans le cas général. Aussi n'apparaît-il pas nécessaire de commenter le contenu de chaque ligne du tableau.

On notera simplement que, à l'étape 12, aucune carte n'émet de message de réponse (il n'y a de numéro variable dans aucune colonne VN₁₁ à VN₁₅), ce qui indique qu'il n'y a plus de carte non identifiées dans la zone d'investigation. Ainsi, il n'a fallut que 12 itérations de l'algorithme pour identifier complètement cinq cartes présentes. Ce très bon résultat est permis par l'effet avantageux du procédé de l'invention selon lequel un bloc de plusieurs bits peut être identifié à chaque itération. Par exemple, on voit qu'à la neuvième itération, on a réussit à identifier six bits du numéro d'identification d'une carte présente (la carte 11).

Il convient encore de donner un exemple de la façon dont les collisions peuvent être détectées.

Dans un exemple de réalisation avantageux, le codage des bits se fait selon un codage avec retour à zéro du signal dans la longueur du bit (codages dits "RZ"), comme un codage de type MANCHESTER.

Selon ce codage l'émission d'un bit de valeur logique 1 correspond à un signal électrique sur le canal de transmission qui est à un niveau haut (par exemple 5 volts) pendant la première moitié de la durée To de transmission du bit (To correspond à une unité temporelle élémentaire), et qui est à un niveau bas (par exemple 0 volt) pendant la seconde moitié de cette durée To.

Aux figures 5a à 5d, on a représenté le niveau du signal électrique présent sur le canal de transmission dans différents cas.

A la figure 5a, il s'agit à la fois du cas où un bit de valeur logique 1 est émis seul et du cas où plusieurs bits de valeur logique 1 sont émis simultanément. On remarque qu'il est impossible de distinguer ces deux cas, dans la mesure où, le cas échéant, les signaux électriques correspondant à l'émission simultanée de plusieurs bits de même valeur se superposent exactement. Il n'y a pas collision.

Symétriquement, la figure 5b correspond à la fois au cas où un bit de valeur logique 0 est émis seul et au cas où plusieurs bits de valeur logique 0 sont émis simultanément. Ces deux cas appellent la même remarque qu'au paragraphe précédent.

La figure 5c correspond au cas où au moins un bit de valeur logique 1 et au moins un bit de valeur logique 0 sont émis simultanément. On remarque que, les signaux électriques étant complémentaires l'un de l'autre, la résultante de leur superposition est un signal électrique au niveau haut (5 volts) pendant toute la durée To. C'est le cas d'une collision entre des bits transmis sur le canal.

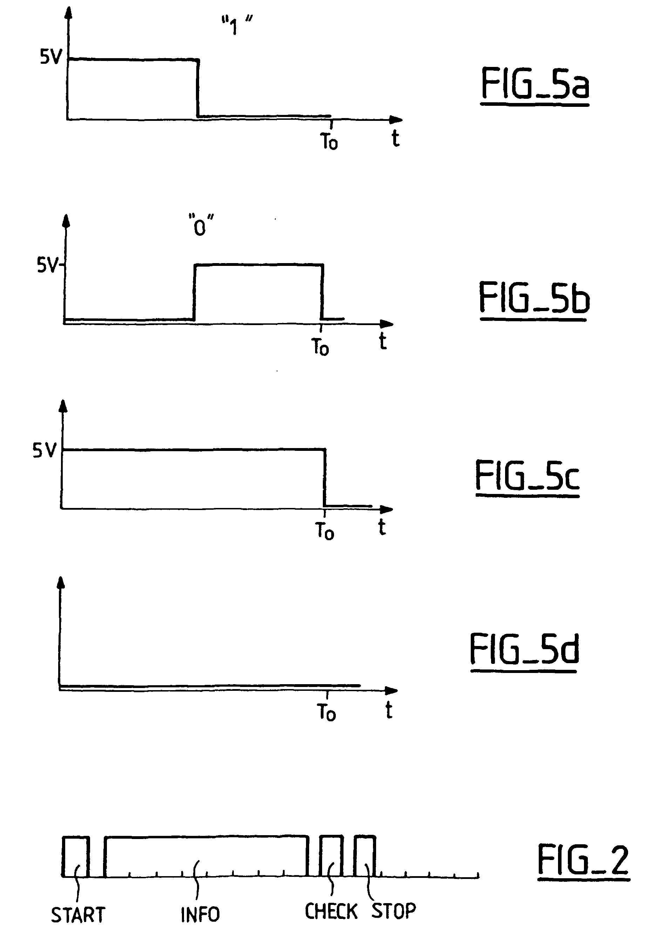

A l'inverse, la figure 5d correspond au cas où aucun bit n'est émis sur la canal de transmission. Il est bien évident qu'aucun signal électrique n'est alors présent sur ledit canal.

Pour un message reçu par une carte électronique, aucune collision ne peut se produire dans la mesure où l'unité d'interrogation est unique et où, par voie de conséquence, un seul message d'interrogation à la fois est émis sur le canal de transmission. Ainsi, il est suffisant d'échantillonner le signal électrique présent sur le canal une seule fois, dans la première moitié de la durée To. En fonction du niveau de cet échantillon (0 ou 5 volts), l'unité de commande UC1 connaît la valeur logique du bit (0 ou 1 respectivement). Néanmoins, on peut également prélever un second échantillon dans la deuxième moitié de la durée To afin de vérifier si cet échantillon a bien un niveau complémentaire du niveau de l'échantillon précédent (c'est à dire 5 ou 0 volts respectivement).

Pour un message reçu par l'unité d'interrogation par contre, la situation est différente. En effet, une collision peut se produire entre les bits des numéros variables compris dans au moins deux messages de réponse transmis simultanément par une pluralité de cartes électroniques. C'est pourquoi, les moyens d'échantillonnage de l'unité d'interrogation doivent impérativement prélever un échantillon dans la première moitié de la durée To et un second échantillon dans la seconde moitié de cette durée. Ces deux échantillons peuvent présenter soit un niveau haut et un niveau bas, soit un niveau bas et un niveau haut, soit encore deux niveaux hauts, soit enfin deux niveaux bas. On est alors respectivement dans le cas des figures 5a, 5b, 5c, et 5d. C'est à dire qu'on est en présence respectivement d'un bit de valeur logique 1, d'un bit de valeur logique 0, d'une collision, ou d'une absence de bit.

Ainsi, on comprend que l'utilisation d'un codage de type Manchester permet la mise en oeuvre d'une méthode très simple pour la détection d'une éventuelle collision lors de la réception d'un message par l'unité d'interrogation.

## Revendications

1. Procédé d'identification de cartes électroniques (12-15) à chacune desquelles est attribué de manière univoque un numéro d'identification, le procédé consistant à reconstituer les numéros d'identification des cartes présentes dans une zone d'investigation (20) selon un algorithme itératif arborescent, **caractérisé en ce que** cet algorithme comprend, à chaque itération, les étapes suivantes:
A) émission par une unité d'interrogation (10) d'un message d'interrogation qui comprend :
- soit un message d'interrogation général (6c) à destination de toutes les cartes présentes encore non identifiées pouvant se trouver dans la zone d'investigation, un tel message d'interrogation général étant émis en particulier à la première itération du procédé,
- soit un message d'interrogation particulier (PC(k)) à destination de certaines seulement desdites cartes, qui sont autorisées à répondre à un tel message;
B) émission d'un message de réponse comprenant un numéro variable (VN_{P}) simultanément par :
- soit, si le message d'interrogation est un message d'interrogation générale (GC), chacune des cartes présentes encore non identifiées, auquel cas la valeur du numéro d'identification de la carte est affectée avant l'émission comme valeur courante du numéro variable;
- soit, si le message d'interrogation est un message d'interrogation particulier, par celles seulement des cartes présentes autorisées à répondre à un tel message qui ont un dit numéro variable (V_{NP}) dont le k-ième bit présente une valeur logique prédéterminée, auquel cas la valeur courante du numéro variable (V_{NP}) est modifiée avant émission par un décalage de ses bits d'un nombre de rangs égal à k, où k est un paramètre entier du message d'interrogation particulier, les autres telles cartes se plaçant dans un état où elles ne sont plus autorisées à répondre aux messages d'interrogation particuliers et dont elles ne sortiront qu'à réception d'un nouveau message d'interrogation général (GC);
C) réception simultanée des messages de réponse par l'unité d'interrogation et analyse des numéros reçus pour,
C.1) en cas de réception d'au moins deux messages de réponse, une collision définie par la réception simultanée de deux bits de valeurs différentes intervenant alors nécessairement à un rang i des numéros variables (V_{NP}) reçus simultanément, identification de la valeur d'un groupe de i bits du numéro d'une carte présente encore non identifiée et, en bouclant sur l'étape A), émission d'un message d'interrogation particulier dont le paramètre k est affecté de la valeur de i; ou
C.2) en cas de réception d'un unique message de réponse, identification d'un groupe des j derniers bits encore non identifiés du numéro d'identification d'une carte présente en sorte que ladite carte est identifiée et, en bouclant sur l'étape A), émission d'un message d'interrogation général (GC).

2. Procédé selon la revendication 1, **caractérisé en ce qu'**il comprend, entre l'étape C.2) et l'étape A), un étape d'émission par l'unité d'interrogation d'un message de mise en sommeil à destination de la carte ainsi identifiée, en sorte que ladite carte n'est plus autorisée à répondre aux messages d'interrogation généraux ou particuliers émis par l'unité d'interrogation.

3. Procédé selon la revendication 1, **caractérisé en ce que**, à l'étape C.1), les i bits identifiés sont affectés, pour les i-1 premiers d'entre eux, de la valeur des i-1 bits des numéros variables reçus avant la collision et, pour le i-ème d'entre eux, d'une valeur logique prédéterminée, la même que celle envisagée à l'étape B).

4. Procédé selon la revendication 1, **caractérisé en ce que**, à l'étape C.2), les j bits identifiés sont affectés par la valeur des j premiers bits du numéro variable reçu dans le message de réponse, en sorte que le numéro d'identification d'une carte présente est complètement reconstitué.

5. Procédé selon l'une quelconque des revendications précédentes, **caractérisé en ce que**, les bits des numéros variables étant reçus par l'unité d'interrogation en commençant par les bits de poids fort, le décalage des bits du numéro variable de i rangs effectué à l'étape B) est un décalage à gauche.

6. Procédé selon la revendication 5, **caractérisé en ce que**, à mesure que les bits du numéro variable sont décalés à gauche, les i bits de poids faibles dudit numéro sont affectés d'une même valeur logique déterminée 1 ou 0, par exemple de la valeur logique 1.

7. Carte **caractérisée en ce qu'**elle est adaptée pour être mise en oeuvre dans le cadre du procédé selon l'une quelconque des revendications 1 à 6, et **en ce qu'**elle comprend :
- une unité de commande (UC1), pilotée par un programme (PROG1) mettant en oeuvre l'étape B dudit procédé;
- une zone (PM1) d'une mémoire non volatile (NVM1) pour sauvegarder ledit programme;
- une zone (IDN₁) d'une mémoire non volatile (NMV1) pour mémoriser son numéro d'identification;
- un premier registre d'état (R1) qui est à une valeur logique déterminée, par exemple la valeur logique 0, lorsque la carte a déjà été identifiée, et est à la valeur logique complémentaire dans le cas contraire;
- un second registre d'état (R2) qui est à une valeur logique déterminée, par exemple la valeur logique 1, lorsque la carte est autorisée à répondre aux messages d'interrogation particuliers émis par l'unité d'interrogation (10);
- une zone d'une mémoire volatile (VM1) pour mémoriser le numéro variable (VN_{P});
- des moyens (ER1) d'émission/réception de messages.

8. Unité d'interrogation **caractérisée en ce qu'**elle est adaptée pour être mise en oeuvre dans le cadre du procédé selon l'une quelconque des revendications 1 à 6, et **en ce qu'**elle comprend :
- une unité de commande (UC2) pilotée par un programme (PROG2) mettant en oeuvre les étapes A et C dudit procédé;
- une zone (PM2) d'une mémoire non volatile (NVM2) pour sauvegarder ledit programme;
- une zone d'une mémoire volatile (VM2) pour mémoriser les numéros d'identification des cartes déjà identifiées;
- une zone d'une mémoire volatile (VM2) pour mémoriser un numéro (RN) en cours de reconstitution.
- des moyens (ER2) d'émission/réception de messages.

9. Système d'identification adapté à la mise en oeuvre du procédé selon l'une quelconque des revendications 1 à 6, **caractérisé en ce qu'**il comprend plusieurs cartes electroniques (11-15) selon la revendication 7 et une unité d'interrogation (10) des cartes selon la revendication 8.

## Claims

1. Method for identifying electronic cards (11-15) to each of which is assigned a unique identification number, the method consisting in reconstructing the identification numbers of the cards present in an investigation zone (20) according to a tree-like iterative algorithm, **characterised in that** this algorithm includes, at each iteration, the following steps:
A) transmission via an interrogation unit (10) of an interrogation message which includes
- either a general interrogation message (GC) intended for all as yet unidentified cards present that may be in the investigation zone, such a general interrogation message being transmitted in particular at the first iteration of the method,
- or a particular interrogation message (PC2) intended for only some of said cards, which are authorised to respond to such a message;
B) transmission of a response message including a variable number (VNP) simultaneously by:
- either, if the interrogation message is a general interrogation message (GC), each of the as yet unidentified cards present, in which case the value of the card identification number is assigned prior to transmission as the current value of the variable number;
- or, if the interrogation message is a particular interrogation message, by only those of the cards present authorised to respond to such a message which have said variable number (VNP) whose kth bit has a predetermined logic value, in which case the current value of the variable number (VNP) is modified before being transmitted by shifting its bits by a number of positions equal to k, where k is an integer parameter of the particular interrogation message, the other such cards being placed in a state where they are no longer authorised to respond to particular interrogation messages and which they will only leave on receipt of a new general interrogation message (GC);
C) simultaneous reception of response messages by the interrogation unit and analysis of the numbers received for,
C.1) in the event of at least two response messages being received, a collision defined by the simultaneous reception of two bits of different values then necessarily occurring at a position i of the variable numbers (VNP) received simultaneously, identification of the value of a group of i bits of the number of an as yet unidentified card present and, in looping to step A), transmission of a particular interrogation message having a parameter k assigned a value of i; or
C.2) in the event of a single response message being received, identification of a group of j as yet unidentified last bits of the identification number of a card present so that said card is identified and, in looping to step A), transmission of a general interrogation message (GC).

2. Method according to claim 1, **characterised in that** it includes, between step C.2) and step A), a step for the transmission by the interrogation unit of a putting-to-sleep message intended for an unidentified card, so that said card is no longer authorised to respond to the general or particular interrogation messages sent by the interrogation unit.

3. Method according to claim 1, **characterised in that**, at step C.1), the i-1 first bits of the i bits identified are assigned a value of i-1 bits of the variable numbers received before collision, and an ith of the i bits is assigned a predetermined logic value, the same as that envisaged in step B).

4. Method according to claim 1, **characterised in that**, at step C.2), the j bits identified are assigned a value of the j first bits of the variable number received in the response message, so that the identification number of a card present is completely reconstructed.

5. Method according to any one of the previous claims, **characterised in that**, the bits of the variable numbers being received by the interrogation unit starting with the most significant bits, the bits of the variable number are shifted by i positions at step B) in a leftward shift.

6. Method according to claim 5, **characterised in that**, as the bits of the variable number are shifted leftward, the i least significant bits of said number are assigned one and the same specified logic value 1 or 0, for example the logic value 1.

7. Card **characterised in that** it is adapted to be implemented under the method according to any one of claims 1 to 6, and **in that** it includes:
- a control unit (UC1), controlled by a program (PROG1) implementing step B) of said method;
- a zone (PM1) of a non-volatile memory (NVM1) to backup said program;
- a zone (IDN₁) of a non-volatile memory (NVM1) to store its identification number;
- a first state register (R1) which is set at a specified logic value, for example the logic value 0, when the card has already been identified, and is at a complementary logic value in the contrary case;
- a second state register (R2) which is set at a specified logic value, for example the logic value 1, when the card is authorised to respond to particular interrogation messages sent by the interrogation unit (10);
- a zone of a volatile memory (VM1) to store the variable number (VNp);
- means (ER1) for the transmission/reception of messages.

8. Interrogation unit **characterised in that** it is adapted to be implemented under the method according to any one of claims 1 to 6, and **in that** it includes:
- a control unit (UC2), controlled by a program (PROG2) implementing steps A and C of said method;
- a zone (PM2) of a non-volatile memory (NVM2) to backup said program;
- a zone of a volatile memory (VM2) to store the identification numbers of the cards already identified;
- a zone of a volatile memory (VM2) to store a number (RN) in the process of being reconstructed.
- means (ER2) for the transmission/reception of messages.

9. Identification system adapted to implementing the method according to any one of claims 1 to 6, **characterised in that** it includes several electronic cards (11-15) according to claim 7 and a card interrogation unit (10) according to claim 8.

## Patentansprüche

1. Verfahren zur Identifizierung von elektronischen Karten (11-15), denen jede auf eindeutige Art und Weise eine Identifizierungsnummer zugeordnet ist, wobei das Verfahren darin besteht, die Identifizierungsnummern von Karten, die in einem Ermittlungsbereich (20) vorhanden sind, gemäß einem iterativen, verzweigten Algorithmus wieder herzustellen, **dadurch gekennzeichnet, dass** der Algorithmus bei jeder Iteration die nachfolgenden Schritte aufweist:
A) Aussenden einer Abfragenachricht durch eine Abfrageeinheit (10), wobei die Abfragenachricht aufweist:
- entweder eine allgemeine Abfragenachricht (GC) mit dem Ziel aller vorhandener, noch nicht identifizierter Karten, die sich in dem Ermittlungsbereich befinden können, wobei eine derartige allgemeine Abfragenachricht insbesondere bei der ersten Iteration des Verfahrens ausgesendet wird;
- oder eine spezielle Abfragenachricht (PC(k)) mit dem Ziel von nur gewissen der Karten, die dazu bevollmächtigt sind, auf eine derartige Nachricht zu antworten;
B) Aussenden einer Antwortnachricht, welche gleichzeitig die variable Nummer (VN_{P}) aufweist durch:
- entweder, wenn die Abfragenachricht eine allgemeine Abfragenachricht (GC) ist, jede der vorhandenen, noch nicht identifizierten Karten, in welchem Fall der Wert der Identifizierungsnummer der Karte vor dem Aussenden als laufender Wert der variablen Nummer angenommen wird;
- oder, wenn die Abfragenachricht eine spezielle Abfragenachricht ist, lediglich diejenigen vorhandenen Karten, welche zum Antworten auf eine derartige Nachricht bevollmächtigt sind, die eine variable Nummer (VNp) aufweisen, deren k-tes Bit einen vorherbestimmten logischen Wert aufweist, in welchem Fall der laufende Wert der variablen Nummer (VN_{P}) vor dem Aussenden durch eine Verschiebung seiner Bits um eine Anzahl von Stellen gleich zu k verändert wird, wobei k ein ganzzahliger Parameter der speziellen Abfragenachricht ist, wobei die anderen Karten sich in einen Zustand setzen, in welchem sie nicht mehr bevollmächtigt sind, auf die speziellen Abfragenachrichten zu antworten, und in welchem sie nur bei Empfang einer neuen allgemeinen Abfragenachricht (GC) herausgehen;
C) gleichzeitiges Empfangen von Antwortnachrichten durch die Abfrageeinheit und Analysieren der empfangenen Nummern für,
C1) im Fall eines Empfangs von mindestens zwei Antwortnachrichten, wobei somit eine durch den gleichzeitigen Empfang von zwei Bits von unterschiedlichen Werten definierte Kollision notwendigerweise um eine Stelle i der gleichzeitig empfangenen variablen Nummern (VNp) eintritt, die Identifizierung des Werts einer Gruppe von i Bits der Nummer einer vorhandenen, noch nicht identifizierten Karte und unter Zurückkehren zu Schritt A), das Aussenden einer speziellen Abfragenachricht, deren Parameter k vom Wert i angenommen wird; oder
C2) im Fall eines Empfangs einer einzigen Antwortnachricht die Identifizierung einer Gruppe der j letzten noch nicht identifizierten Bits der Identifizierungsnummer einer vorhandenen Karte derart, dass die Karte identifiziert wird und unter Zurückkehren zu Schritt A), das Aussenden einer allgemeinen Abfragenachricht (GC).

2. Verfahren nach Anspruch 1, **dadurch gekennzeichnet, dass** es zwischen dem Schritt C2) und dem Schritt A) einen Schritt des Aussendens einer Stilllegenachricht durch die Abfrageeinheit mit dem Ziel der so identifizierten Karte derart aufweist, dass die Karte nicht mehr bevollmächtigt ist, auf allgemeine oder spezielle Abfragenachrichten, die durch die Abfrageeinheit ausgesendet werden, zu antworten.

3. Verfahren nach Anspruch 1, **dadurch gekennzeichnet, dass** in Schritt C1) die i identifizierten Bits für die i-1 ersten unter ihnen von dem Wert der i-1 Bits der variablen, vor der Kollision empfangenen Nummern, angenommen werden und den i-ten unter ihnen ein vorherbestimmter logischer Wert, gleich zu demjenigen, der in Schritt B) in Betracht gezogen wird.

4. Verfahren nach Anspruch 1, **dadurch gekennzeichnet, dass** in Schritt C2) die j identifizierten Bits durch den Wert der ersten j Bits der variablen Nummer angenommen werden, die in der Antwortnachricht aufgenommen wird, derart, dass die Identifizierungsnummer einer vorhandenen Karte vollständig wieder hergestellt wird.

5. Verfahren nach einem der vorangegangenen Ansprüche, **dadurch gekennzeichnet, dass** wenn die Bits der variablen Nummern durch die Abfrageeinheit unter Beginn mit den stark ins Gewicht fallenden Bits empfangen werden, die Verschiebung der Bits der variablen Nummer, die um i Stellen in Schritt B) ausgeführt wird, eine Verschiebung nach links ist.

6. Verfahren nach Anspruch 5, **dadurch gekennzeichnet, dass** in der Maßgabe, dass die Bits der variablen Nummer nach links verschoben werden, die i Bits von geringem Gewicht der Nummer einen gleichen logischen, vorherbestimmten von Wert 1 oder 0 annehmen, zum Beispiel den logischen Wert 1.

7. Karte, **dadurch gekennzeichnet, dass** sie angepasst ist, im Rahmen des Verfahrens nach einem der Ansprüche 1 bis 6 umgesetzt zu werden und dass sie aufweist:
- eine Steuerungseinheit (UC1), die durch ein Programm (PROG1) gesteuert wird, welches den Schritt B des Verfahrens umsetzt;
- einen Bereich (PM1) eines nicht-flüchtigen Speichers (NVM1) zum Sichern des Programms;
- einen Bereich (IDN₁) eines nicht-flüchtigen Speichers (NMV1) zum Speichern seiner Identifizierungsnummer;
- ein erstes Zustandsregister (R1), das in einem vorherbestimmten logischen Wert ist, zum Beispiel dem logischen Wert 0, wenn die Karte schon identifiziert worden ist, und in dem komplementären logischen Wert im entgegen gesetzten Fall;
- ein zweites Zustandsregister (R2), das in einem vorherbestimmten logischen Wert ist, zum Beispiel dem logischen Wert 1, wenn die Karte bevollmächtigt ist, auf spezielle Abfragenachrichten zu antworten, die von der Abfrageeinheit (10) ausgesendet werden;
- einen Bereich eines flüchtigen Speichers (VM1) zum Speichern der variablen Nummer (VN_{P});
- Mittel (ER1) zum Aussenden/Empfangen von Nachrichten.

8. Abfrageeinheit **dadurch gekennzeichnet, dass** sie angepasst ist, im Rahmen des Verfahrens nach einem der Ansprüche 1 bis 6 umgesetzt zu werden, und dass sie aufweist:
- eine Steuerungseinheit (UC2), die durch ein Programm (PROG2) gesteuert wird, das die Schritte A und C des Verfahrens umsetzt;
- einen Bereich (PM2) eines nicht-flüchtigen Speichers (NVM2) zum Sichern des Programms;
- einen Bereich eines flüchtigen Speichers (VM2) zum Speichern der Identifizierungsnummern von schon identifizierten Karten;
- einen Bereich eines flüchtigen Speichers (VM2) zum Speichern einer Nummer (RN), welche gerade wieder hergestellt wird;
- Mittel (ER2) zum Aussenden/Empfangen von Nachrichten.

9. System zur Identifizierung, das zum Umsetzen des Verfahrens nach einem der Ansprüche 1 bis 6 angepasst ist, **dadurch gekennzeichnet, dass** es mehrere elektronische Karten (11-15) nach Anspruch 7 und eine Abfrageeinheit (10) für Karten nach Anspruch 8 aufweist.
